# EUROPEAN PATENT SPECIFICATION

(11) **EP 0 466 441 B1**
(45) Date of publication and mention of the grant of the patent: **20.12.1995**
(21) Application number: 91306192.5
(22) Date of filing: 08.07.1991
(51) Int. Cl.: G11B 15/61

(54) **Rotary head drum units**
Drehkopf-Trommel-Einheiten
Unités à tambour à tête rotative

(30) Priority: 10.07.1990 JP 182250/90
(43) Date of publication of application: 15.01.1992
(73) Proprietor: SONY CORPORATION, Tokyo 141 (JP)
(72) Inventor: Sawai, Jun, c/o Patents Division, Shinagawa-ku, Tokyo 141 (JP); Kiriyama, Hiroshi, c/o Patents Division, Shinagawa-ku, Tokyo 141 (JP); Hashimoto, Keisuke, c/o Patents Division, Shinagawa-ku, Tokyo 141 (JP); Maeda, Satoshi, c/o Patents Division, Shinagawa-ku, Tokyo 141 (JP)
(74) Representative: Pilch, Adam John Michael

(56) References cited:
- DE-A- 3 118 241
- DE-A- 3 545 804
- DE-A- 3 802 276
- PATENT ABSTRACTS OF JAPAN vol. 12, no. 214 (P-718)(3061) 18 June 1988 & JP-A- 63 010 312 ( TOSHIBA ) 16 January 1988

## Description

This invention relates to rotary head drum units having stationary upper and lower drums, and which may be applied to recording/reproducing apparatus such as a video tape recorder (VTR).

The present applicant has previously proposed a rotary head drum unit for a VTR in Japanese Utility Model Laid-Open (Kokai) No. JP-A-62-73337. As shown in Figures 7 to 10C of the accompanying drawings, in this previously-proposed rotary head drum unit, a plurality of rotary heads 4 (such as magnetic heads) are positioned for rotation between an upper drum 2 and a lower drum 3 fixedly connected to each other by a drum post 1. A rotary flange (not shown) for rotatively driving the rotary heads 4 is disposed coaxially with the upper drum 2 and the lower drum 3. The diameter of the upper drum 2 is greater than that of the lower drum 3. A taper surface 6 is formed in the lower portion of the upper drum 2, and a reduced portion 5 of a diameter equal to that of the lower drum 3 is formed contiguously with the lower end of the taper surface 6. The taper surface 6 and the reduced portion 5 are symmetrical with respect to the axis of the upper drum 2. A helical tape guiding surface, hereinafter referred to as a helical tape lead 7, is formed in the circumference of the lower drum 3. A magnetic tape 8 is guided by a lead-out guide 9 and a lead-in guide 10 so as to extend helically across the upper drum 2 and the lower drum 3 with the lower edge 8a of the tape 8 guided by the tape lead 7. The arc ϑ₁ of contact between the rotary head drum unit and the magnetic tape 8 may, for example, be about 188° and the data recording angle ϑ₂ of the rotary heads 4 may, for example, be about 178°.

When recording data on or reproducing recorded data from the magnetic tape 8 by rotating the rotary heads 4 in the direction of an arrow b at a high rotating speed while the magnetic tape 8 runs in the direction of an arrow a, the magnetic tape 8 is biased downwardly by the taper surface 6 of the upper drum 2 so that the lower edge 8a of the magnetic tape 8 slides along the tape lead 7 as the magnetic tape 8 runs.

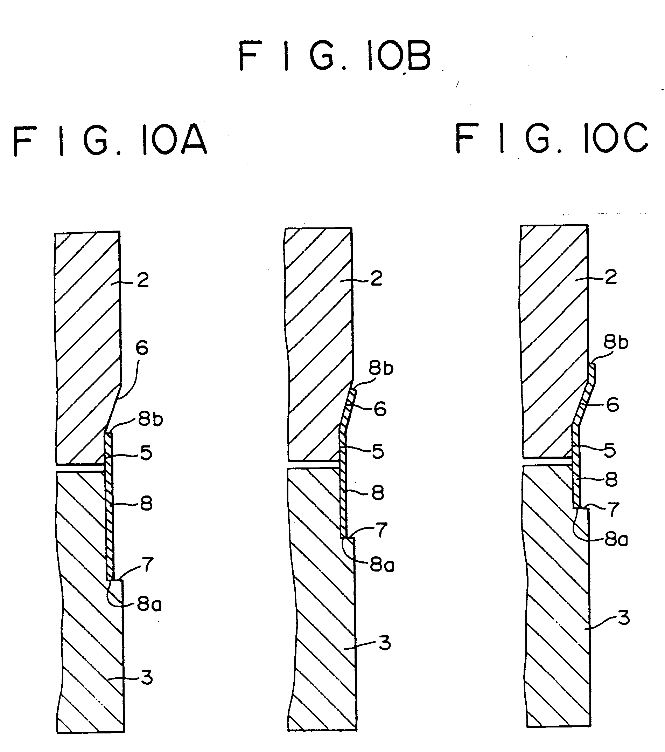

As is apparent from Figures 10A, 10B and 10C showing longitudinal sections of the rotary head drum unit at different angular positions, since a portion of the upper drum 2 having the taper surface 6 extends in a plane perpendicular to the axis of the upper drum 2, the vertical position of the magnetic tape 8 moves downwards relative to the taper surface 6 as the magnetic tape advances. Since the portion of the upper drum 2 having the taper surface 6 extends in a plane perpendicular to the axis of the upper drum 2, whereas the magnetic tape 8 runs obliquely to the taper surface 6, the upper edge 8b of the magnetic tape 8 deviates completely downwardly away from the taper surface 6 in a lead-out region 11 near a departing position at which the magnetic tape 8 departs from the rotary head drum unit. Accordingly, the taper surface 6 is unable to urge the magnetic tape 8 downwardly in the lead-out region 11 and, consequently, the lower edge 8a of the magnetic tape 8 is liable to separate in an upward direction from the tape lead 7 as a result of which the magnetic tape 8 is then liable to run unstably. In the lead-out region 11 near the departing position, a portion of the magnetic tape 8 near the upper edge 8b is liable to be slack and, consequently, the magnetic tape 8 is liable to be in faulty contact with the rotary heads 4.

According to one aspect of the invention there is provided a rotary head drum unit for a recording/reproducing apparatus, the unit comprising:
a stationary lower drum provided at its circumference with a helical tape lead for guiding the lower edge of a magnetic tape;
a stationary upper drum fixedly connected to the lower drum, and provided at its lower end with a taper surface within the contact region between tape and upper drum so as to bias the tape towards the tape lead; and
rotary heads between the upper and lower drums;
characterised in that the taper surface of the upper drum has a helical taper section extending substantially in parallel with the helical tape lead of the lower drum in a lead-out region near a departing position at which the magnetic tape departs from the lower drum.

In another aspect of the invention, a rotary head drum unit comprises a stationary upper drum provided at its lower end with a taper surface for biasing a magnetic tape downwardly, a stationary lower drum provided at its circumference with a helical tape lead to guide the lower edge of a tape helically extended across the upper and lower drums, and rotary heads positioned between the upper and lower drums, characterised in that at least a portion of the taper surface of the upper drum in a lead-out region near a departing position at which the magnetic tape departs from the rotary head drum unit is extended helically substantially in parallel to the helical tape lead.

Such a rotary head drum unit is able to make a tape run with its upper edge sliding along the taper surface of the upper drum even in the lead-out region, so that the taper surface is able to bias the tape securely towards the tape lead of the lower drum even in the lead-out region. Since the upper portion of the tape near its upper edge is continually in sliding contact with the taper surface of the upper drum even in the lead-out region, the upper portion of the tape is kept taut while the tape runs along the rotary head drum unit.

The invention will now be described by way of example with reference to the accompanying drawings, throughout which like parts are referred to by like references, and in which:
Figure 1A is a plan view of a rotary head drum unit according to a preferred embodiment of the present invention;
Figure 1B is an opened-out side view development of the circumference of the rotary head drum unit of Figure 1A;
Figure 2 is a fragmentary perspective view of a portion of the rotary head drum unit of Figures 1A and 1B in the vicinity of a lead-out region near a departing position where a magnetic tape departs from the rotary head drum unit;
Figures 3A, 3B and 3C are sectional views taken on lines IIIA-IIIA, IIIB-IIIB and IIIC-IIIC, respectively, in Figure 1B;
Figure 4A is a plan view of a modification of the rotary head drum unit shown in Figure 1A;
Figure 4B is an opened-out side view development of the circumference of the rotary head drum unit of Figure 4A;
Figure 5 is a fragmentary perspective view of a portion of the rotary head drum unit of Figures 4A and 4B in the vicinity of the lead-out region;
Figures 6A, 6B and 6C are sectional views taken on lines VIA-VIA, VIB-VIB and VIC-VIC, respectively, in Figure 4B;
Figure 7 is a front view of a known rotary head drum unit;
Figure 8A is a plan view of the rotary head drum unit of Figure 7;
Figure 8B is an opened-out side view development of the circumference of the rotary head drum unit of Figure 7;
Figure 9 is a fragmentary perspective view of a portion of the rotary head drum unit of Figure 7 in the vicinity of a lead-out region; and
Figures 10A, 10B and 10C are sectional views taken on lines XA-XA, XB-XB and XC-XC, respectively, in Figure 8B.

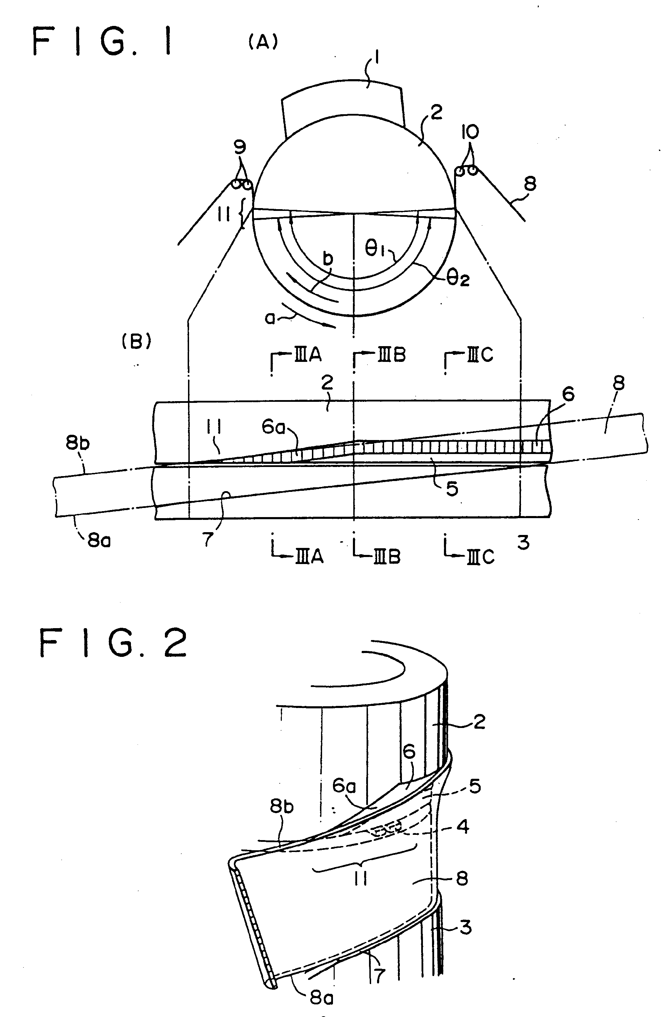

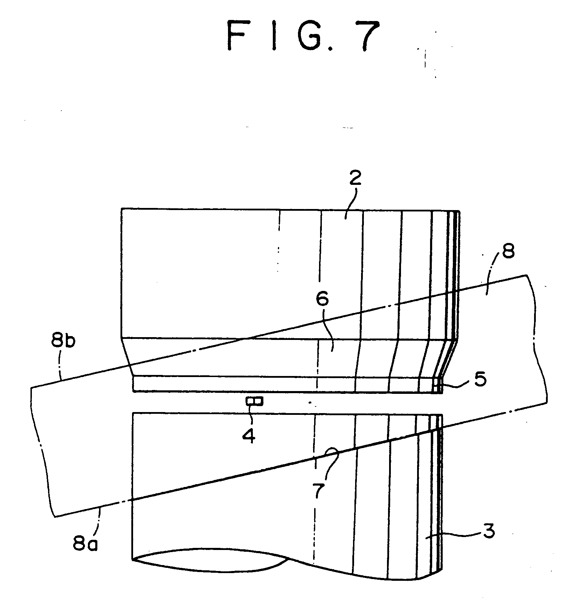

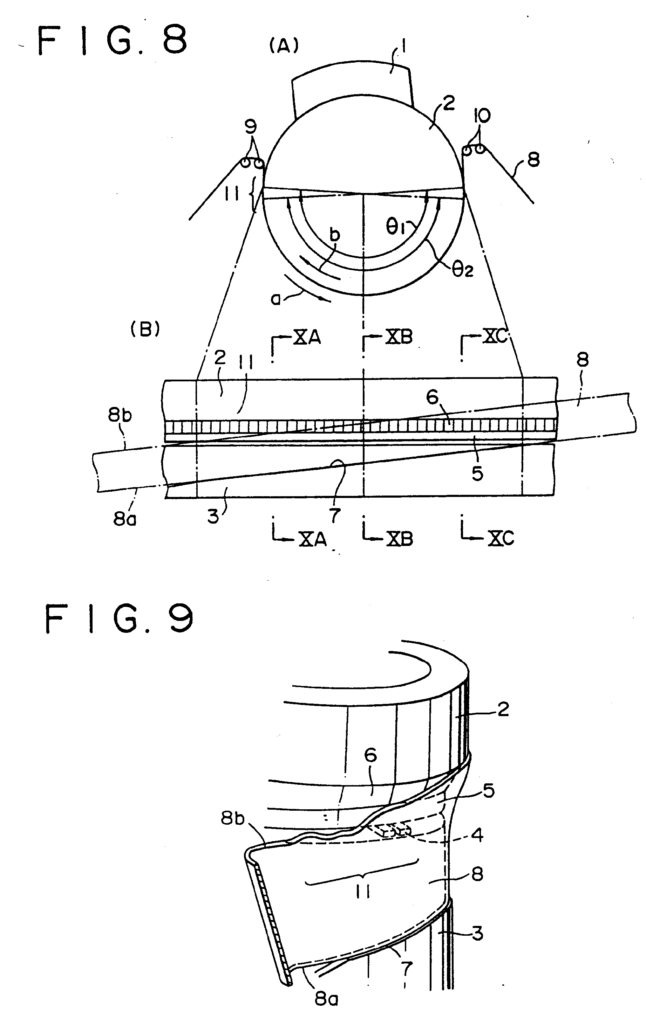

A rotary head drum unit according to a preferred embodiment of the present invention will be described hereinafter as applied to a VTR with reference to Figures 1A to 6C, in which parts similar or corresponding to those shown in Figures 7 to 10C are denoted by the same reference characters, and detailed description of these parts will be omitted to avoid duplication.

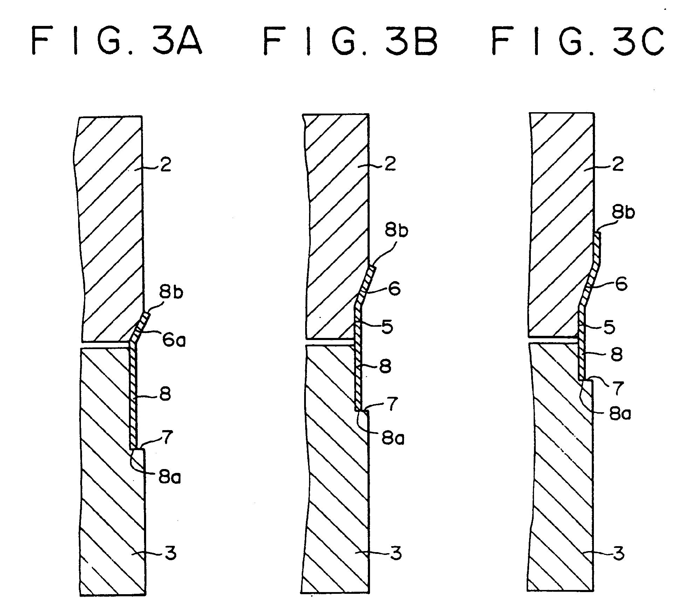

Referring to Figures 1A to 3C, a rotary head drum unit has an upper drum 2 provided at its lower end with a taper surface 6 having a helical taper section 6a in a lead-out region 11 near a departing position at which a magnetic tape 8 departs from the rotary head drum unit. The helical taper section 6a extends in parallel to a helical tape lead 7 formed in the circumference of a lower drum 3. The helical taper section 6a descends towards the departing position in parallel with the helical tape lead 7 in a region between a position shown in Figure 3B and a position shown in Figure 3A. Another section of the taper surface 6 between the position shown in Figure 3B and a position shown in Figure 3C extends in a plane perpendicular to the axis of the upper drum 2, namely the rotational axis of the rotary heads 4.

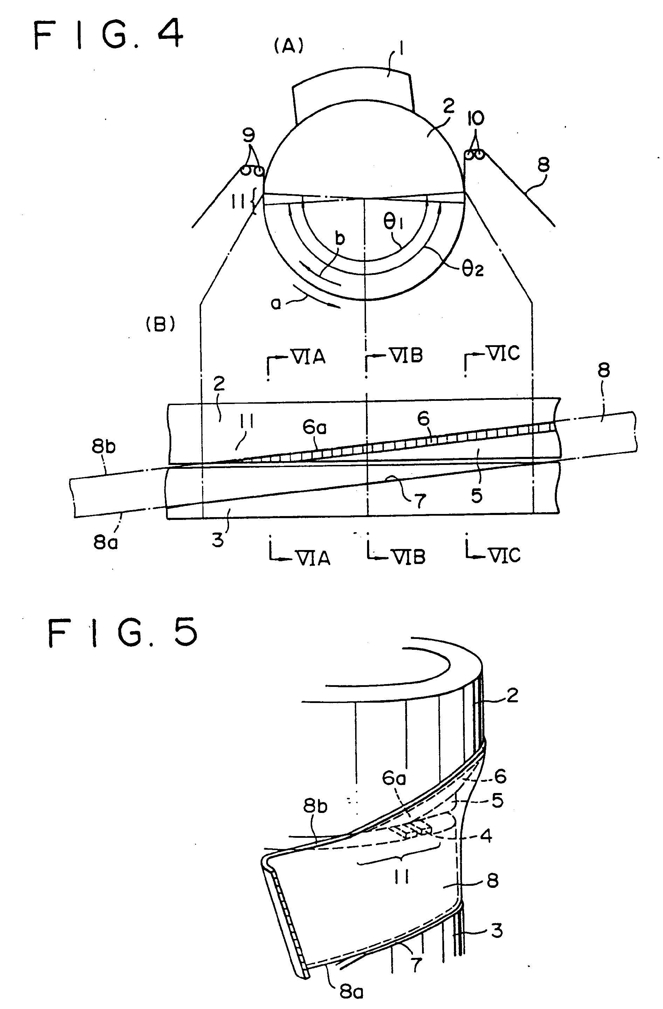

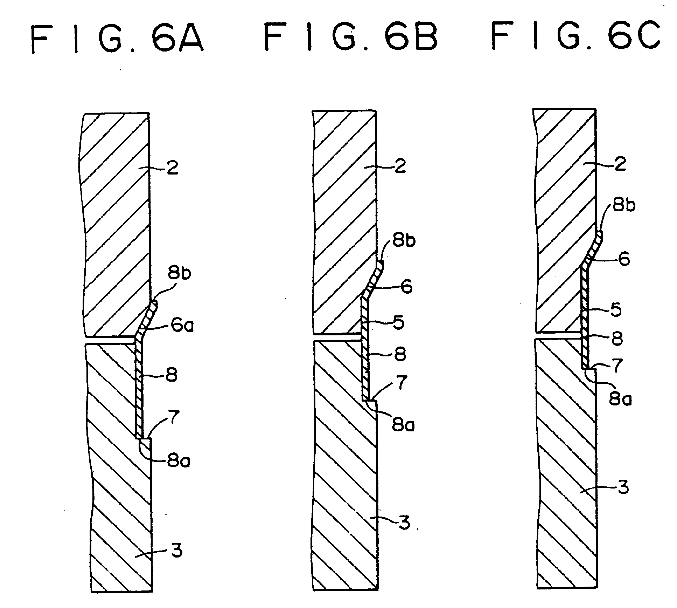

In a rotary head drum unit according to a modification shown in Figures 4A to 6C, the upper drum 2 is provided at its lower end with a helical taper surface 6 extending in parallel to a helical tape lead 7 formed in the circumference of the lower drum 3 over the entire arc ϑ₁ of contact between the magnetic tape 8 and the rotary head drum unit. The portion of the upper drum 2 provided with the helical taper surface 6 descends towards the lead-out region in parallel with the tape lead 7 of the lower drum 3 as shown in Figures 6A to 6C.

In either the rotary head drum unit shown in Figure 1A or the rotary head drum unit shown in Figure 4A, the upper portion of the magnetic tape 8 near its upper edge 8b slides along the helical taper section 6a or the helical taper surface 6 parallel to the helical tape lead 7 in the lead-out region 11, so that the helical taper section 6a or the helical taper surface 6 is able to bias the magnetic tape 8 securely towards the helical tape lead 7 such that the lower edge 8a of the magnetic tape 8 is guided by the helical tape lead 7 to secure the magnetic tape 8 for stable running.

Since the upper edge 8b of the magnetic tape 8 is in sliding contact with the helical taper section 6a or the helical taper surface 6 in the lead-out region 11, the upper portion of the magnetic tape 8 near its upper edge 8b is continually kept taut while the magnetic tape 8 is running, so that faulty contact between the magnetic tape 8 and the rotary heads 4 due to slack in the upper portion of the magnetic tape 8 near its upper edge 8b can be obviated. Since the helical taper section 6a in contact with the upper portion of the magnetic tape 8 near its upper edge 8b varies gradually with respect to the radial direction, the helical taper section 6a does not affect the contact between the magnetic tape 8 and the rotary head 4 at all adversely.

## Claims

1. A rotary head drum unit for a recording/reproducing apparatus, the unit comprising:
a stationary lower drum (3) provided at its circumference with a helical tape lead (7) for guiding the lower edge (8a) of a magnetic tape (8);
a stationary upper drum (2) fixedly connected to the lower drum (3), and provided at its lower end with a taper surface (6) within the contact region between tape and upper drum so as to bias the tape towards the tape lead; and
rotary heads (4) between the upper and lower drums (2,3);
characterised in that the taper surface (6) of the upper drum (2) has a helical taper section (6a) extending substantially in parallel with the helical tape lead (7) of the lower drum (3) in a lead-out region (11) near a departing position at which the magnetic tape (8) departs from the lower drum (3).

2. A rotary head drum unit according to claim 1, wherein the diameter of the upper drum (2) is greater than that of the lower drum (3), and the diameter of the lower end of the taper surface (6) is equal to that of the lower drum (3).

3. A rotary head drum unit according to claim 1 or claim 2, wherein the helical taper section (6a) extends over one circumferential part of a contact region between the magnetic tape (8) and the upper drum (2,3), the taper surface (6) over the other part of the contact region extending in a plane perpendicular to the rotational axis of the rotary heads (4).

4. A rotary head drum unit according to claim 1 or claim 2, wherein the helical taper section (6a) extends in circumferential direction over the contact region between the magnetic tape (8) and the upper drum (2,3).

5. A rotary head drum unit according to any one of the preceding claims, wherein the upper and lower drums (2,3) are fixedly disposed in a recording/reproducing apparatus.

## Patentansprüche

1. Drehkopftrommeleinheit für ein Aufzeichnungs/Wiedergabegerät, wobei die Einheit aufweist:
eine stationäre untere Trommel (3), die an ihrem Umfang mit einer schraubenförmigen Bandführung (7) versehen ist, um den unteren Rand (8a) eines Magnetbandes (8) zu führen;
eine stationäre obere Trommel (2), die fest mit der unteren Trommel (3) verbunden ist und die an ihrem unteren Ende mit einer Verjüngungsoberfläche (6) innerhalb des Kontaktbereichs zwischen Band und oberer Trommel versehen ist, um das Band in Richtung auf die Bandführung vorzuspannen; und
Drehköpfe (4) zwischen der oberen und unteren Trommel (2, 3);
dadurch gekennzeichnet, daß die Verjüngungsoberfläche (6) der oberen Trommel (2) einen schraubenförmigen Verjüngungsabschnitt (6a) aufweist, der sich im wesentlichen parallel mit der schraubenförmigen Bandführung (7) der unteren Trommel (3) in einem Auslaufbereich (11) in der Nähe einer Auslaßposition erstreckt, bei der das Magnetband (8) die untere Trommel (3) verläßt.

2. Drehkopftrommeleinheit nach Anspruch 1, wobei der Durchmesser der oberen Trommel (2) größer als der der unteren Trommel (3) ist, und der Durchmesser des unteren Endes der Verjüngungsoberfläche (6) gleich dem der unteren Trommel (3) ist.

3. Drehkopftrommeleinheit nach Anspruch 1 oder 2, wobei sich der schraubenförmige Verjüngungsabschnitt (6a) über ein Umfangsteil eines Kontaktbereichs zwischen dem Magnetband (8) und der oberen Trommel (2, 3) erstreckt, wobei sich die Verjüngungsoberfläche (6) über dem anderen Teil des Kontaktbereichs in einer Ebene senkrecht zur Drehachse der Drehköpfe (4) erstreckt.

4. Drehkopftrommeleinheit nach Anspruch 1 oder 2, wobei der schraubenförmige Verjüngungsabschnitt (6a) sich in Umfangsrichtung über den Kontaktbereich zwischen dem Magnetband (8) und der oberen Trommel (2, 3) erstreckt.

5. Drehkopftrommeleinrichtung nach einem der vorhergehenden Ansprüche, wobei die obere und untere Trommel (2, 3) fest in einem Aufzeichnungs/Wiedergabegerät angeordnet sind.

## Revendications

1. Unité de tambours de têtes rotatives pour un appareil d'enregistrement/lecture, l'unité comprenant :
un tambour inférieur fixe (3) muni sur sa circonférence d'une glissière de bande hélicoïdale (7), servant à guider le bord inférieur (8a) d'une bande magnétique (8) ;
un tambour supérieur fixe (2) relié rigidement au tambour inférieur (3) et muni à son extrémité inférieure d'une surface à section décroissante (6) dans la région de contact entre la bande et le tambour supérieur de manière à tendre à repousser la bande vers la glissière de bande ; et
des têtes rotatives (4) placées entre les tambours supérieur et inférieur (2, 3) ;
caractérisée en ce que la surface à section décroissante (6) du tambour supérieur (2) possède une section à section décroissante hélicoïdale (6a) qui s'étend sensiblement parallèlement à la glissière de bande hélicoïdale (7) du tambour inférieur (3) dans une région de guidage en sortie (11), à proximité d'une position de séparation où la bande magnétique (8) se sépare du tambour inférieur (3).

2. Unité de tambours de têtes rotatives selon la revendication 1, dans laquelle le diamètre du tambour supérieur (2) est plus grand que celui du tambour inférieur (3) et le diamètre de l'extrémité inférieure de la surface à section décroissante (6) est égal à celui du tambour inférieur (3).

3. Unité de tambours de têtes rotatives selon la revendication 1 ou la revendication 2, dans laquelle la section à section décroissante hélicoïdale (6a) s'étend sur une partie circonférentielle d'une région de contact entre la bande magnétique (8) et le tambour supérieur (2, 3), la surface à section décroissante (6) sur l'autre partie de la région de contact s'étendant dans un plan perpendiculaire à l'axe de rotation des têtes rotatives (4).

4. Unité de tambours de têtes rotatives selon la revendication 1 ou la revendication 2, dans laquelle la section à section décroissante hélicoïdale (6a) s'étend dans la direction circonférentielle sur la région de contact entre la bande magnétique (8) et le tambour supérieur (2, 3).

5. Unité de tambours de têtes rotatives selon une quelconque des revendications précédentes, dans laquelle les tambours supérieur et inférieur (2, 3) sont disposés en position fixe dans un appareil d'enregistrement/lecture.
